# EUROPEAN PATENT SPECIFICATION

(11) **EP 2 173 573 B1**
(45) Date of publication and mention of the grant of the patent: **01.02.2012**
(21) Application number: 07805658.7
(22) Date of filing: 22.06.2007
(51) Int. Cl.: B60C 9/20

(54) **HEAVY LOAD VEHICLE TIRE**
FAHRZEUGREIFEN FÜR SCHWERLASTEN
PNEU DE VÉHICULE POIDS LOURD

(43) Date of publication of application: 14.04.2010
(73) Proprietor: Pirelli Tyre S.P.A., 20126 Milan (IT)
(72) Inventor: MINOLI, Claudio, I-20126 Milano (IT); MONTANARO, Fabio, I-20126 Milano (IT)
(74) Representative: Lasca, Sergio
(86) International application number: PCT/IT2007/000446
(87) International publication number: WO 2009/001376

(56) References cited:
- EP-A- 0 309 134
- WO-A-03/074297
- FR-A- 2 513 187
- JP-A- 7 323 703
- US-A- 3 506 052
- US-A- 3 789 898
- US-A- 3 842 884
- US-A- 4 696 335
- US-A1- 2004 026 000

## Description

### Field of the invention

The present invention relates to a heavy load vehicle tire.

More in particular the present invention relates to a heavy load vehicle tire comprising an improved belt structure.

As it is known, a tire usually comprises a carcass structure of a substantially toroidal shape, having opposite lateral edges associated with respective right-hand and left-hand bead structures; a belt structure: applied in a radially external position with respect to said carcass structure; a tread band applied in a radially external position with respect to said belt structure; a pair of sidewalls applied laterally on opposite sides with respect to said carcass structure.

It is well known that the belt structure may exert a very important influence both on the performances of the tire (for example, in terms of prompt response to steering and of direction steadiness) and on the service life thereof, in particular on the wear speed and evenness of the tread band. For example, an uneaven wear of the tread band adversely affects the drive behaviour of the tire giving rise to vibrations and continuous deviations of the vehicle from its trajectory.

Attempts to solve the problems above reported have been already made in the art.

For example, United States Patent US 5,772,810 relates to a tire comprising a radial carcass reinforcement surmonted by a crown reinforcement formed, in direction radially from the inside to the outside, of at least one triangulation ply of non-stretchable metal wires or cables which form an angle of between 60° and 90° with the circumferential direction and of two working plies formed of non-stretchable metal wire or cables crossed from one ply to the next and forming an angle of between 10° and 45° with the circumferential direction, characterized by the fact that the first working ply, which is radially adjacent on the outside of the radially outermost triangulation ply, has a width less than the width of said triangulation ply, the second working ply, which is radially above the first working ply, has an axial width greater than the width of the triangulation ply, and the edges of said second working ply cover the edges of said triangulation ply so that the radial distances between the respective wires or cables of the two plies at the level of said edges are at most equal to 1.5 mm over an axial distance at least equal to 2% of the axial width of the triangulation ply. A variant of said tire is disclosed which further comprises an additional ply including metal elements oriented in a substantially circumferential direction, said additional ply having an axial width of less than the width of the first working ply and located radially between the two working ply. The abovementioned tire is said to be particularly useful for heavy vehicles and to have an improved crown reinforcement and, consequently, an improved service life.

United States Patent US 6,659,147 relates to a tire with radial carcass reinforcement, having a crown reinforcement comprising at least two working crown plies made up of inextensible wire reinforcing elements, crossed from one ply to the next by forming opposite but equal angles with the circumferential direction ranging from between 10° and 60°, and an axially continuous additional ply, the additional ply being placed between radially adjacent ones of the at least two working crown plies and being made up of wire reinforcing elements of greater diameter than that of the reinforcing elements of the radially adjacent ones of the working plies and having an axial width equal to at least 50% of the maximum axial width of the carcass reinforcement, wherein the reinforcing elements of the additional ply are made of steel and are corrugated in the plane of the ply, the corrugation being parallel to one another, in phase and oriented parallel to the circumferential direction, so that the ratio of amplitude to wavelength of the corrugated elements decreases axially from the center to the edges of said additional ply, reaching a minimum at said edges. The abovementioned tire is said to be particularly useful for heavy vehicles and to have an improved crown reinforcement endurance from the standpoint of resistance to separation between carcass reinforcement and crown reinforcement, resistance to separation between the working crown plies and fatigue strength of the circumferentially oriented cords of the additional ply.

United States Patent US 6,619,357 relates to a pneumatic super single radial truck tire comprising at least one pair of parallel annular beads, at least one carcass ply wrapped around said beads, a crown reinforcing structure comprising adjacent spliced belt plies reinforced with steel cords and at least one helically wound belt ply reinforced with straight high elongation steel cords, disposed over said at least one carcass ply in a crown area of said tire, a tread disposed over said crown reinforcing structure, and sidewall disposed between said tread and said beads, wherein said at least one helically wound belt ply is located between the at least one carcass ply and the radially innermost spliced belt ply. The abovementioned tire is said to be endowed with:
- an improved crown area durability;
- an improved footprint shape and footprint pressure distribution;
- excellent high speed properties and improved wear properties;
- an optimized trade-off between handling and durability.

United States Patent 6,082,4 relates to a tire with radial carcass reinforcement, having a crown reinforcement comprising at least two working crown plies made of inextensible cables, crossed from one ply to the other and forming angles of between 10° and 45° with the circumferential direction, characterized in that in the absence of any ply formed of inextensible cables forming an angle greater than 45° with the circumferential direction, an additional, axially continuous, ply formed of metallic elements oriented substantially parallel to the circumferential direction, is placed radially between said at least two working plies, said additional, axially continuous, ply having an axial width at least equal to 1.05 times the axial width of the widest working crown ply. The abovementioned tire is said to show a reduced operating temperatures, in particular at the ends of the working crown plies.

Document WO-A-03/074297 relates to a tire comprising a carcass reinforcement whereon is radially mounted a crown reinforcement and a tire tread. The crown reinforcement comprises two plies of metallic reinforcing elements which are mutually parallel in each ply and criss-crossed from one ply to the next, forming an angle of between 10 and 35° with the circumferential direction. Said crown reinforcement also comprises a ply of reinforcing elements in each shoulder which are mutually parallel in the ply and which are oriented radially. The axially inner edge of said ply is disposed such that it is radially adjacent to at least one edge of one of the plies of the crown reinforcement while the axially outer edge of said ply is radially lower than the edge of the above-mentioned adjacent ply.

### Summary of the invention

The Applicant has noticed that sometimes, during use of the tire, because of the stresses occuring between the belt structure and the carcass and, more particularly, between the belt structure layers, some premature and dangerous separations of the belt structure layers from each other and from the carcass may occur, which result in the tire becoming out of use. Moreover, the Applicant has noticed that, in particular at the shoulder regions of the tire which are usually subjected to continuous microsliding on the asphalt, a premature wear may occur, which results in an uneven wear of the tread band. Furthermore, the Applicant has noticed that, in particular in the case of tires used in the drive position, an irregular wear may also occur in each block, in particular between the centre and the edges of the blocks which are made on the rolling surface of the tread band. Moreover, the Applicant has noticed that the tire performances (such as, for example, drive behaviour, steering stability; straight running, lateral stability, handling, ride comfort) may be negatively affected.

The Applicant has faced the problem of providing a tire, preferably a heavy load vehicles tire, having both an improved structural integrity of the belt structure and an improved wear evenness of the tread band, as well as improved tire performances.

The Applicant has now found that it is possible to obtain a tire having the above reported properties by applying both at least one pair of lateral reinforcing layers substantially simmetrically arranged with respect to the equatorial plane of the tire and applied in correspondence of the axially external portions of the tire belt structure, said lateral reinforcing layers incorporating reinforcing elements oriented in a substantially circumferential direction, said lateral reinforcing layers being positioned under at least two crossed belt layers and at least one additional reinforcing layer positioned between said two crossed belt layers, said at least one additional reinforcing layer being provided with reinforcing elements oriented in a substantially circumferential direction.

The so obtained tire shows an improved structural integrity of the belt structure and an improved wear evenness of the tread band, as well as improved tire performances (in particular, improved straight running and lateral stability). Furthermore, said tire shows both improved footprint shape and footprint pressure distribution, Moreover, said tire is endowed with an improved load bearing capacity during use. Furthermore, said tire shows a good balance between handling and durability. Moreover, said tire may be retreaded more than once so as to allow a decrease on the maintenance costs of the truck fleets.

According to a first aspect, the present invention relates to a tire comprising:
- a carcass structure comprising at least one carcass ply, of as substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- two sidewalls, each sidewall being applied laterally on opposite sides with respect to said carcass structure;
said belt structure comprising:
- at least one pair of lateral reinforcing layers substantially symmetrically arranged with respect to the equatorial plane of said tire and applied in correspondence of the axially external portions of said tire belt structure, said tateral reinforcing layers being provided with reinforcing elements oriented in a substantially circumferential direction;
- a first belt layer applied in a radially external position with respect to said at least one pair of lateral reinforcing layers, said first belt layer being provided with reinforcing elements parallel to one another and inclined with respect to the - equatorial plane of said tire;
- at least one additional reinforcing layer applied in a radially external position with respect to said first belt layer, said additional reinforcing layer being provided with reinforcing elements oriented in a substantially circumferential direction;
- a second belt layer applied in a radially external position with respect to said at least one additional reinforcing layer, said second belt layer being provided with reinforcing elements parallel to one another and inclined with respect to the equatorial plane of said tire in a direction opposite to those of said first belt layer.

According to one preferred embodiment, said belt structure further comprises an external belt layer applied in a radially external position with respect to said first and said second belt layers, said external belt layer being provided with reinforcing elements parallel to one another.

According to one preferred embodiment, said tire is a heavy load vehicle tire.

For the aim of the present description and of the claims which follow, the expression "heavy load vehicle tire" means vehicle of categories M2-M3, N2-N3 and O2-O4. according to ECE Consolidated Resolution of the Construction of Vehicles (R.E.3), Annex 7, "Classification and definition of power-driven vehicles and trailers", such as, for example, truck, tractor-trailers, lorries, buses, large vans, and other similar vehicles.

The present invention, in the abovementioned aspect may show one or more of the preferred characteristics hereinafter described.

According to one preferred embodiment, each of said lateral reinforcing layers has an axial width lower than or equal to 40%, more preferably of from 5% to 30%, still more preferably of from 10% to 25%, with respect to the axial width of the belt structure, said axial width corresponding to the axial width of the wider belt layer. This allows to avoid an uneven wear of the tread band, as well as to improve the load bearing capacity of the tire during use.

According to a further preferred embodiment, said lateral reinforcing layers are positioned directly in contact with said carcass structure.

According to a further preferred embodiment, at least one belt underlayer is positioned between said belt structure and said carcass structure.

According to a further preferred embodiment, said lateral reinforcing layers have their axially external edges staggered axially inwards with respect to the corresponding axially external edges of said first belt layer.

According to one preferred embodiment, said first belt layer is positioned directly in contact with said at least one pair of lateral reinforcing layers.

According to a further preferred embodiment, said first belt layer has its axially external edges staggered axially inwards with respect to the corresponding axially external edges of said second belt layer. This allows to obtain an improved structural integrity of the belt structure.

According to one preferred embodiment, said additional reinforcing layer has its axially external edges staggered axially inward with respect to the corresponding external edges of said first belt layer. This allows to obtain an improved structural integrity of the belt structure.

According to a further preferred embodiment, said additional reinforcing layer has its axially external edges staggered axially inward with respect to the corresponding external edges of said second belt layer. This allows to obtain an improved structural integrity of the belt structure.

According to a further preferred embodiment, said additional reinforcing layer has its axially external edges in correspondence of the axially external edges of said lateral reinforcing layers.

In an alternative embodiment, said additional reinforcing layer has its axially external edges in correspondence of the axially external edges of said at least one of said first and said second belt layers.

According to one preferred embodiment, said external belt layer has its axially external edges staggered axially inwards with respect to the corresponding axially external edges of said second belt layer.

According to a further preferred embodiment, said external belt layer has its axially external edges at an axially outward position with respect to the axially internal edges of said lateral reinforcing layers.

According to a further preferred embodiment, said external belt layer has its axially external edges at an axially inward position with respect to the axially internal edges of said additional reinforcing layer.

According to a further preferred embodiment, said external belt layer has its axially external edges in correspondence of the axially external edges of said lateral reinforcing layers.

According to a further preferred embodiment, said external belt layer has its axially external edges in correspondence of the axially external edges of said additional reinforcing layer.

According to a further preferred embodiment, the reinforcing elements of said external belt layer are inclined with respect to the equatorial plane of said tire.

According to a further preferred embodiment, the reinforcing elements of said external belt layer are inclined in the same direction of the reinforcing elements of said first belt layer.

According to a further preferred embodiment, the reinforcing elements of said external belt layer are inclined in the same direction of the reinforcing elements of said second belt layer.

Said external belt layer may act as a protection layer from stones or gravel possibly entrapped into the tread grooves and which may cause damages to the belt structure and even to the carcass structure.

according to one preferred embodiments, said belt structure further, comprise an additional belt layer (hereinafter preferred also to as a "third belt layer"), applied in a radially external position with respect to said second belt layer, said third belt layer being provided with reinforcing elements arranged parallel to one another and inclined with respect to the equatorial plane of said tire. Preferably, said reinforcing elements are inclined with respect to the equatorial plane of said tire in a direction opposite to those of said second belt layer. Said third belt layer allows to obtain an improved structural integrity of the belt structure, as well as to improve the load bearing capacity of the tire during use.

according to a further preferred embodiment, said third belt layer is positioned directly in contact with said second belt layer.

According to a further preferred embodiment, said third belt layer has its axially external edges staggered axially inwards with respect to the corresponding axially external edges of said second belt layer.

For the purpose of the present description and of the claims which follow, except in the operating examples, or where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

### Brief description of the drawings

Additional features and advantages of the invention will be better apparent from the following description of some preferred embodiments of a tire according to the present invention, which description is made, by way of non-limiting example, with reference to the attached Fig. 1-2 wherein:
- Fig. 1 is a view in cross-section of a portion of a tire according to the present invention;
- Fig. 2 is a view in cross-section of a further embodiments of a tire according to the present invention.

### Detailed description of the preferred embodiments

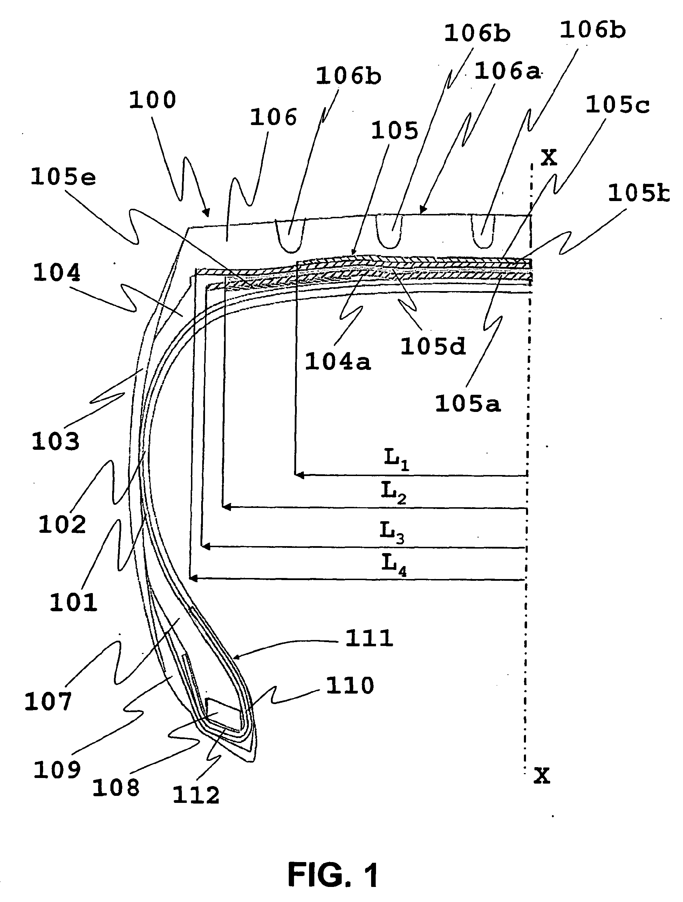

For simplicity, Fig. 1 shows only a portion of the tire, the remaining portion not represented being identical and simmetrically arranged with respect to the equatorial plane (x-x) of the tire.

The tire (100) comprises at least one carcass ply (101), the opposite lateral edges of which are associated with respective bead structures comprising at least one bead core (108) and at least one bead filler (107). The association between the carcass ply (101) and the bead core (108) is achieved here by turning back the opposite lateral edges of said at least one carcass ply (101) around the bead core (108) so as to form the so-called carcass turn-up (112) as represented in Fig. 1.

Alternatively, the conventional bead core (108) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-back around said annular inserts, the coupling being provided by a second carcass ply (not represented in Fig. 1) applied externally over the first.

The carcass ply (101) generally comprises a plurality of reinforcing elements arranged parallel to each other and at least partially coated with a layer of a crosslinked elastomeric material. These reinforcing elements, in particular in case of heavy load vehicle tires, are usually made of steel wires stranded together, coated with a metal alloy (for example copper/zinc, zinc/manganese, zinc/molybdenum/cobalt alloys and the like). Textile fibres such as, for example, rayon, nylon or polyethylene terephthalate, may be used for different type of tyres,

The carcass ply (101) is usually of radial type, i.e. it incorporates reinforcing elements arranged in a substantially perpendicular direction relative, to a circumferential direction. The bead core (108) is enclosed in a bead (111), defined along an inner circumferential edge of the tire (100), with which the tire engages on a rim (not represented in Fig.1) forming part of a vehicle wheel. The space defined by each carcass turn-up (112) contains a bead filler (107) usually made of a crosslinked etastomeric material and a bead core (108).

An antiabrasive strip (109) is usually placed in an axially external position relative to the carcass turn-up (112).

A reinforcing layer (110), known as "flipper", is usually wound around the bead core (108) and the bead filler (107) so as to at least partially envelope them.

A belt structure (105) is applied along the circumference of the carcass ply (101). In the particular embodiment of Fig. 1, the belt structure (105) comprises:
- a lateral reinforcing layer (105e) positioned in a radially external position with respect to said at least one carcass ply (101);
- a first belt layer (105a) positioned in a radially external position with respect to said lateral reinforcing layer (105e),
- an additional reinforcing layer (105d) positioned in a radially external position with respect said first belt layer (105a);
- a second belt layer (105b) positioned in a radially exernal position with respect to said additional reinforcing layer (105d);
- an external belt layer (105c) positioned in a radially external position with respect to said second belt layer (105b).

Usually, said first belt layer (105a) and said second belt layer (105b) incorporate a plurality of reinforcing elements, typically metal cords, said reinforcing elements being parallel to one another in each layer and intersecting with respect to the adjacent layer, inclined preferably in a symmetrical manner with respect to the equatorial plane (x-x) of the tire at an angle of from 10° to 40°, preferably of from 12° to 30°, and coated with a crosslinked elastomeric material. Preferably, said reinforcing elements have a end counts of from 30 cords/dm to 80 cords/dm, preferably of from 40 cords/dm to 65 cords/dm, measured on said two belt layers (105a) and (105b), in a direction normal to cords.

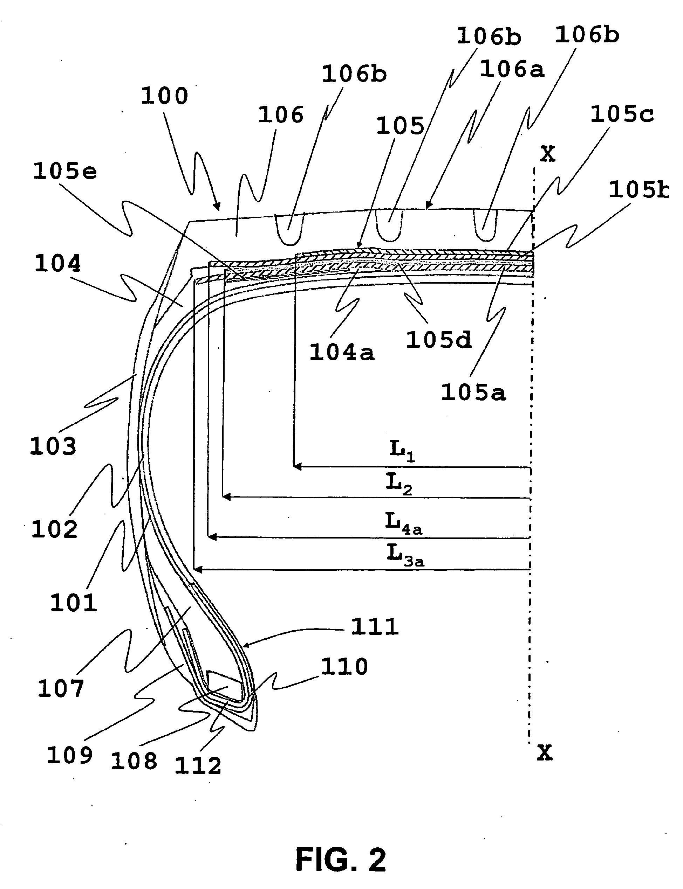

In the particular embodiment of Fig. 1, said first belt layer (105a) has its axially external edge staggered axially inwards with respect to the corresponding axially external edge of said second belt layer (105b). Alternatively, said first belt layer (105a) may have its axially external edge:
- staggered axially outwards with respect to the corresponding axially external edge of said second belt layer (105b) (as represented in Fig. 2); or
- in correspondence of the axially external edge of said second belt layer (105b) (not represented in Fig. 1); or
- in correspondence of the axially external edge of the wider belt layer (not represented in Fig. 1).

Said lateral reinforcing layer (105e) usually incorporates a plurality of reinforcing elements, typically metal cords with a breakage elongation value of from 3% to 10%, preferably of from 3.5% to 7%, said reinforcing elements being oriented in a substantially circumferential direction, thus forming an angle of a few degrees (e.g., an angle of from 0° to 5°) with respect to the equatorial plane (x-x) of the tire, and coated with a crosslinked elastomeric material. Preferably, said reinforcing elements have a end counts of from 30 cords/dm to 80 cords/dm, preferably of from 40 cords/dm to 60 cords/dm, measured on said pair of lateral reinforcing layers (105e), in a direction normal to cords.

In the particular embodiment of Fig. 1; said lateral reinforcing layer (105e) is positioned directly in contact with said at least one carcass ply (101).

In the particular embodiment of Fig. 1, said lateral reinforcing layer (105e) has its axially external edge staggered axially inwards with respect to the corresponding axially external edge of said first belt layer (105a). Alternatively, said lateral reinforcing layer (105e) may have its axially external edge:
- staggered axially outwards with respect to the corresponding axially external edge of said first belt layer (105a) (not represented in Fig. 1); or
- in correspondence of the axially external edge of said first belt layer (105a) (not represented in Fig. 1); or
- in correspondence of the axially external edge of the wider belt layer (not represented in Fig. 1).

Said lateral reinforcing layer (105e) may be obtained by helicoidally winding at least one continuous elongated element comprising one or more reinforcing cord on said carcass ply (101).

Said additional reinforcing layer (105d) usually incorporates a plurality of reinforcing elements, typically metal cords with a breakage elongation value of from 3% to 10%, preferably of from 3.5% to 7%, said reinforcing elements being oriented in a substantially circumferential direction, thus forming an angle of a few degrees e.g., an angle of from 0° to 5°) with respect to the equatorial plane (x-x) of the tire, and coated with a crosslinked elastomeric material. Preferably, said reinforcing elements have a end count of from 30 cords/dm to 80 cords/dm, preferably of from 40 cords/dm to 60 cords/dm, measured on said additional reinforcing layer (105d), in a direction normal to cords.

In the particular embodiment of Fig. 1, said additional reinforcing layer (105d) is positioned directly in contact with both said first belt tayer (105a) and said second belt laye (105b).

In the particutar embodiment of Fig. 1, said additional reinforcing layer (105d) has its axially external edge in correspondence of the axially external edge of said lateral reinforcing layer (105e). Alternatively, said additional reinforcing tayer (105d) may have its axially external edges
- staggered axially outwards with respect to the corresponding axially external edge of said first belt layer (105a) (not represented in Fig. 1); or
- in correspondence of the axially external edge of said first belt layer (105a) (not represented in Fig. 1); or
- in correspondence of the axially external edge of the wider belt layer (not represented in Fig. 1).

Said additional reinforcing layer (105d) may be obtained by helicoidally winding at least one continuous elongated element comprising one or more reinforcing cord on said first belt layer (105a).

As represented in Fig. 1, said additional reinforcing layer (105d) extends over a surface substantially corresponding to the surface of development of said first belt layer (105a). Alternatively, said additional reinforcing layer (105d) may extend only along at least one portion of the development of said first belt layer (105a), for instance at opposite'side portions of said first belt layer (105a).

The reinforcing elements of both said lateral reinforcing layer (105e) and said additional reinforcing layer (105d) may comprise at least one preformed elementary metal wire. Preferably, said preformed elementary metal wire is preformed in one plane.

Preferably, said elementary metal wire is preformed so that it assumes a wave-shaped configuration so that it is substantially devoid of sharp edges and/or discontinuities in curvature along their longitudinal extension. Said feature is particularly advantageous since the absence of said sharp edges results in a favourable increasing of the breaking load of the elementary metal wire.

Particularly preferred is a preforming according to substantially sinusoidal undulations. Preferably, said sinusoidal undulations have a wavelength of from 2.5 mm to 30 mm, and more preferably of from 5 mm to 25 mm. Preferably, said sinusoidal undulations have a wave amplitude of from 1 mm to 5 mm.

In an alternative embodiment; the elementary metal wire is not preformed in a plane but, for example, is helically preformed.

In order to obtain said preformed elementary metal wire, it is possible to use any one of the methods known in the art. For example, it is possible to use toothed-wheel devices of the type illustrated in United States Patent US 5,581,990 or to use the device described in International Patent Application WO 00/39385.

Said external belt layer (105c) usually comprises a plurality of reinforcing elements, typically metal cords, said reinforcing elements being arranged parallel to one another, inclined with respect to the equatorial plane (x-x) of the tire by an angle of from 10° to 70°, preferably of from 12° to 40°, and coated with a crosslinked elastomeric material. Preferably, said reinforcing elements have a end counts of from 30 cords/dm to 75 cords/dm, preferably of from 40 cords/dm to 70 cords/dm, measured on said external belt layer (105c), in a direction normal to cords. Preferably, said reinforcing elements may comprise at least one preformed elementary metal wire, said preformed elementary metal wire being above disclosed. Said external belt layer (105c) acts as a protection layer from stones or gravel possibly entrapped into the tread grooves (106b) and which may cause damages to the belt layers (105a), (105b), (105d) and (105e) and even to the carcass ply (101).

In the particular embodiment of Fig. 1, said external belt layer (105c) has its axially external edge staggered axially inwards with respect to the corresponding axially external edge of said second belt layer (105b). Alternatively, said external belt layer (105c) may have its axially external edge:
- staggered axially outwards with respect to the corresponding axially external edge of said second belt layer (105b) (not represented in Fig. 1); or
- in correspondence of the axially external edge of said second belt layer (105b) (not represented in Fig. 1);
- in correspondence of the axially external edge of the wider belt layer (not represented in Fig. 1).

In the particular embodiment of Fig. 1, the axial width of the belt structure (105) corresponds to the axial width (L₄) of the second belt layer (105b) measured between its edges parallel to the axis of rotation of the tire (100). Preferably, the maximum width of the belt structure (105) is equal to 90% of the tire section width.

For the aim of the present description and of the claims which follow, the term "section width" refers to the maximum linear distance parallel to the axis of the tire and between exterior of its sidewalls. Said "section width" may be determined according to ETRTO Standard.

In the particular embodiment of Fig. 1, the first belt layer (105a) has an axial width (L₃) which is lower than the axial width (L₄) of the second belt layer (105b), so that its axially external edge is staggered axially inwards by a predetermined distance with respect to the corresponding axially external edge of said second belt layer (105b). Usually, said predetermined distance is of from 2 mm to 80 mm, preferably of from 5 mm to 60 mm.

In the particular embodiment of Fig. 1, the additional reinforcing layer (105d) has an axial width (L₂) which is lower than both the axial width (L₃) of the first belt layer (105a) and the axial width (L₄) of the second belt layer (105b), so that its axially external edge is staggered axially inwards by a predetermined distance with respect to the corresponding axially external edge of both said first belt layer (1 05a) and said second belt layer (105b). Usually, said predetermined distance, is of from 2 mm to 30 mm, preferably of from 5 mm to 15 mm, with respect to the axially external edge of the lowest belt layer [in the particular embodiment of Fig. 1, the first belt layer (105a)].

In the particular embodiment of Fig. 1, said lateral reinforcing laver (105e) has its axially external edge which is staggered axially inwards by a predetermined distance with respect to the axially external edge of said first belt layer (105a). Usually, said predetermined distance is of from 2 mm to 30 mm, preferably of from 5 mm to 15 mm.

In the particular embodiment of Fig. 1, the external belt layer (105c) has an axial width (L₁) which is lower than the axial width (L₄) of said second belt layer (105b), so that its axially external edge is staggered axially inwards with respect to the axially external edge of said second belt laver (105b) Preferably, said external belt layer (105c) coyers a portion of at least 3%, preferably of from 10% to 95%, of said lateral reinforcing layer (105e).

In the particutar embodiment of Fig. 1 an insert (104) comprising a crosslinked elastomeric material is located at the buttress area, i.e. the area where the lateral edges of the tread band (106) is connected to the sidewall (103). Usually, the insert (104) is interposed between the carcass ply (101), the belt structure (105) and the sidewall (103).

An additional insert (104a) made of a crosslinked elastomeric material is located at the lateral internal edge of each of said taterat reinforcing layer (105e) and interposed between the carcass ply (101) and the first belt layer (105a).

Alternatively, at least two inserts comprising a crosslinked elastomeric material, each insert being substantially simmetrically arranged with respect to the equatorial plane of said tire, are applied between said first belt layer (105a) and said additional reinforcing layer (105d), each insert being applied in correpondence of the axially external edge of said first belt layer (1 05a) and said additional reinforcing layer (1 05d) (not represented in Fig. 1).

Alternatively, at least two inserts comprising a crosslinked elastomeric material, each insert being substantially simmetrically arranged with respect to the equatorial plane of said tire, are applied between said additional reinforcing layer (105d) and said second belt layer (105b), each insert being applied in correspondence of the axially external edge of said additional reinforcing layer (105d) and said second belt layer (105b) (not represented in Fig. 1).

A tread band (106), whose lateral edges are connected to the sidewall (103), is applied circumferentially in a position radially external to the belt structure (105). Externally, the tread band (106) has a rolling surface (106a) designed to come into contact with the ground. Circumferential grooves (106b) which are connected by transverse notches (not represented in Fig. 1) so as to define a tread pattern which comprises a plurality of blocks of various shapes and sizes distributed over the rolling surface (106a) are generally made in this surface (106a).

A sidewall (103) is applied externally onto the carcass ply (101), this sidewall extending, in an axially external position, from the bead (111) to the edge of the tread band (106).

In the case of tubeless tires, a rubber layer (102) generally known as a liner, which provides the necessary impermeability to the inflation air of the tire, may also be provided in an inner position relative to the carcass ply (101).

Fig. 2 shows a view in cross-section of a portion of the same tire (100) of Fig.1, the only difference being the fact that the first belt layer (105a) has its axially external edges staggered axially outwards with respect to the axially external edges of the second belt layer (105b).

The process for producing the tire according to the present invention may be carried out according to techniques and using apparatus known in the art, said process including manufacturing the green tire, and subsequently moulding and vulcanizing the green tire.

The present invention will be further illustrated below by means of a number of illustrative embodiments which are given for purely indicative purposes and without any limitation of this invention.

### Example 1

A tire (Tire A), having size 315/60R22.5, was manufactured according to the embodiment of Fig. 1.

A comparative tire (Tire B), having size 315/60R22.5, was manufactured according to the embodiment of Fig. 1, the only difference being the fact that the additional reinforcing layer (105d) is not present.

Tire A and Tire B were subjected to outdoor testings.

### Outdoor testing

Tire A and Tire B were subjected to straight running test.

The test was conducted at a speed of 80 km/h, on straight roads having different surfaces (e.g., flat and regular surface and undulated surface). For instance, the driver evaluated the steering corrections (if any) necessary to keep a straight path, the capacity of the tire to overcome any upward projecting bumps of the road, the rigidity of the steering-wheel, the lateral stability, the comfort.

The tires were mounted in the following vehicle Scania 144/530. The tires were fitted on standard rims and were inflated to the nominal operating pressure (i.e. 8 bar).

The test driver judged the tire behaviour and assigned a score depending on the tire performances during the above test. Table 1 sums up the test driver's score sheet for the tire controllability. The results of said tests are expressed by means of an evaluation scale representing the subjective opinion expressed by the test driver through a point system. The values reproduced in the following Table 1 represent a mean value between those obtained in several test sessions (5 - 6 tests, for example) and given by several tests drivers. It should be noted that the scale of Values run from a minimum of 4 to a maximum of 9.

**TABLE 1**

| | Straight running | Lateral stability | Comfort |
|---|---|---|---|
| Tire A | 6.5 | 7.0 | 6.0 |
| Tire B* | 6.0 | 6.5 | 6.0 |

| | | | |
|---|---|---|---|
| *comparative. | | | |

The results given in Table 1 shows that the tire according to the present invention (Tire A) has a better behaviour with respect to the comparative tire (Tire B), in particular shows improved performances in relation to straight running and lateral stability.

## Claims

1. Tire (100) comprising:
- a carcass structure comprising at least one carcass ply (101), of a substantially toroidal shape, having opposite lateral edges associated with respective right-hand and left-hand bead structures;
- a belt structure (105) applied in a radially external position with respect to said carcass structure;
- a tread band (106) applied in a radially external position with respect to said belt structure (105);
- two sidewalls (103), each sidewall being applied laterally on opposite sides with respect to said carcass structure;
**characterized in that** said belt structure comprising:
- at least one pair of lateral reinforcing layers substantially (105e) symmetrically arranged with respect to the equatorial plane of said tire (100) and applied in correspondence of the axially external portions of said tire belt structure (105), said lateral reinforcing layers (105e) being provided with reinforcing elements oriented in a substantially circumferential direction;
- a first belt layer (105a)applied in a radially external position with respect to said at least one pair of lateral reinforcing layers (105e), said first belt layer (105a) being provided with reinforcing elements parallel to one another and inclined with respect to the equatorial plane of said tire (100);
- at least one additional reinforcing layer (105d) applied in a radially external position with respect to said first belt layer (105a), said additional reinforcing layer (105d) being provided with reinforcing elements oriented in a substantially circumferential direction;
- a second belt layer (105b) applied in a radially external position with respect to said at least one reinforcing layer (105e), said second belt layer (105b) being provided with reinforcing elements parallel to one another and inclined with respect to the equatorial plane of said tire (100) in a direction opposite to those of said first belt layer (1 05a).

2. Tire (100) according to claim 1, wherein said belt structure (105) further comprises an external belt layer (105c) applied in a radially external position with respect to said first (105a) and said second (105b) belt layers, said external belt layer (105c) being provided with reinforcing elements parallel to one another.

3. Tire (100) according to claim 1 or 2, wherein each of said lateral reinforcing layers (105e) has an axial width lower than or equal to 40% with respect to the axial width of the belt structure (105), said axial width corresponding to the axial width of the wider belt layer.

4. Tire (100) according to claim 3, wherein each of said lateral reinforcing layers (1 05e) has an axial width of from 5% to 30% with respect to the axial width of the belt structure (105), said axial width corresponding to the axial width of the wider belt layer.

5. Tire (100) according to any one of the preceding claims, wherein said lateral reinforcing layers (105e) are positioned directly in contact with said carcass structure.

6. Tire (100) according to any one of claims 1 to 4, wherein at least one belt underlayer is positioned between said belt structure (105) and said carcass structure.

7. Tire (100) according to any one of the preceding claims, wherein said lateral reinforcing layers (105e) have their axially external edges staggered axially inwards with respect to the corresponding axially external edges of said first belt layer (1 05a).

8. Tire (100) according to any one of the preceding claims, wherein said first belt layer (105a) is positioned directly in contact with said at least one pair of lateral reinforcing layers (105e).

9. Tire (100) according to any one of the preceding claims, wherein said first belt layer (105a) has its axially external edges staggered axially inwards with respect to the corresponding axially external edges of said second belt layer (105b).

10. Tire (100) according to any one of the preceding claims, wherein the reinforcing elements of said first belt layer (105a) and said second belt layer (105b) are inclined with respect to the equatorial plane of said tire (100) at an angle of from 10° to 40°.

11. Tire (100) according to any one of the preceding claims, wherein said additional reinforcing layer (105d) has its axially external edges staggered axially inward with respect to the corresponding external edges of said first belt layer (105a) and/or of said second belt layer (105b).

12. Tire (100) according to any one of the preceding claims, wherein said additional reinforcing layer (105d) has its axially external edges in correspondence of the axially external edges of said lateral reinforcing layers (105e).

13. Tire (100) according to any one of claims 1 to 10, wherein said at least one additional reinforcing layer (105d) has its axially external edges in correspondence of the axially external edges of said at least one of said first (105a) and said second (105b) belt layers.

14. Tire (100) according to any one of the preceding claims, wherein both said lateral reinforcing layers (105e) and said additional reinforcing layer (105d) comprise at least one preformed elementary metal wire.

15. Tire (100) according to any one of the preceding claims, wherein said external belt layer (1 05c) has its axially external edges at an axially outward position with respect to the axially internal edges of said lateral reinforcing layers (105e) or in correspondence of the axially external edges of said lateral reinforcing layers (105e).

16. Tire (100) according to any one of the preceding claims, wherein said external belt layer (105c) has its axially external edges at an axially inward position with respect to the axially internal edges of said additional reinforcing layer (105d) or in correspondence of the axially external edges of said additional reinforcing layer (1 05d).

17. Tire (100) according to any one of the preceding claims, wherein said belt structure further comprises an additional belt layer applied in a radially external position with respect to said second belt layer (105b), said additional belt layer being provided with reinforcing elements arranged parallel to one another and inclined with respect to the equatorial plane of said tire (100).

18. Tire (100) according to any one of the preceding claims, which is a heavy load vehicle tire.

## Patentansprüche

1. Reifen (100) mit:
- einer Karkassenstruktur mit wenigstens einer Karkassenlage (101) von einer im Wesentlichen ringförmigen Gestalt mit gegenüberliegenden seitlichen Kanten, die jeweils rechten und linken Wulststrukturen zugeordnet sind;
- einer Gürtelstruktur (105), die an einer in Bezug auf die Karkassenstruktur radial äußeren Position aufgebracht ist;
- einem Laufflächenband (106), das an einer in Bezug auf die Gürtelstruktur (105) radial äußeren Position aufgebracht ist;
- zwei Seitenwänden (103), wobei jede Seitenwand seitlich auf in Bezug auf die Karkassenstruktur gegenüberliegenden Seiten aufgebracht ist;
**dadurch gekennzeichnet, dass** die Gürtelstruktur aufweist:
- wenigstens ein Paar seitlicher Verstärkungsschichten (105e), die im Wesentlichen symmetrisch in Bezug auf die Äquatorebene des Reifens (100) angeordnet sind und die entsprechend den axial äußeren Abschnitten der Reifengürtelstruktur (105) aufgebracht sind, wobei die seitlichen Verstärkungsschichten (105e) mit Verstärkungselementen versehen sind, die in einer im Wesentlichen umfänglichen Richtung orientiert sind;
- eine erste Gürtelschicht (105a), die an einer in Bezug auf das wenigstens eine Paar seitlicher Verstärkungsschichten (105e) radial äußeren Position aufgebracht ist, wobei die erste Gürtelschicht (105a) mit Verstärkungselementen versehen ist, die parallel zueinander und in Bezug auf die Äquatorebene des Reifens (100) geneigt sind;
- wenigstens eine zusätzliche Verstärkungsschicht (105d), die an einer in Bezug auf die erste Gürtelschicht (105a) radial äußeren Position aufgebracht ist, wobei die zusätzliche Verstärkungsschicht (105d) mit Verstärkungselementen, die in einer im Wesentlichen umfänglichen Richtung orientiert sind, versehen ist;
- eine zweite Gürtelschicht (105b), die an einer in Bezug auf die wenigstens eine Verstärkungsschicht (105e) radial äußeren Position aufgebracht ist, wobei die zweite Gürtelschicht (105b) mit Verstärkungselementen versehen ist, die parallel zueinander sind und die in Bezug auf die Äquatorebene des Reifens (100) in einer Richtung entgegengesetzt zu derjenigen der ersten Gürtelschicht (105a) geneigt sind.

2. Reifen (100) nach Anspruch 1, bei dem die Gürtelstruktur (105) ferner eine äußere Gürtelschicht (105c) aufweist, die an einer radial äußeren Position in Bezug auf die erste (105a) und zweite (105b) Gürtelschichten aufgebracht ist, wobei die äußere Gürtelschicht (105c) mit Verstärkungselementen versehen ist, die parallel zueinander sind.

3. Reifen (100) nach Anspruch 1 oder 2, bei dem jede der seitlichen Verstärkungsschichten (105e) eine axiale Breite aufweist, die kleiner oder gleich 40% in Bezug auf die axiale Breite der Gürtelstruktur (105) ist, wobei die axiale Breite der axialen Breite der breiteren Gürtelschicht entspricht.

4. Reifen (100) nach Anspruch 3, bei dem jede der seitlichen Verstärkungsschichten (105e) eine axiale Breite zwischen 5% und 30% in Bezug auf die axiale Breite der Gürtelstruktur (105) aufweist, wobei die axiale Breite der axialen Breite der breiteren Gürtelschicht entspricht.

5. Reifen (100) nach einem der vorherigen Ansprüche, bei dem die seitlichen Verstärkungsschichten (105e) direkt in Kontakt mit der Karkassenstruktur positioniert sind.

6. Reifen (100) nach einem der Ansprüche 1 bis 4, bei dem wenigstens eine Gürtelunterschicht zwischen der Gürtelstruktur (105) und der Karkassenstruktur positioniert ist.

7. Reifen (100) nach einem der vorherigen Ansprüche, bei dem die seitlichen Verstärlcungsschichten (105e) ihre axial äußeren Kanten axial nach innen in Bezug auf die entsprechenden axial äußeren Kanten der ersten Gürtelschicht (105a) versetzt aufweisen.

8. Reifen (100) nach einem der vorherigen Ansprüche, bei dem die erste Gürtelschicht (105a) direkt in Kontakt mit dem wenigstens einen Paar seitlicher Verstärkungsschichten (105e) positioniert ist.

9. Reifen (100) nach einem der vorherigen Ansprüche, bei dem die erste Gürtelschicht (105a) ihre axial äußeren Kanten axial nach innen in Bezug auf die entsprechenden axial äußeren Kanten der zweiten Gürtelschicht (105b) versetzt aufweist.

10. Reifen (100) nach einem der vorherigen Ansprüche, bei dem die Verstärkungselemente der ersten Gürtelschicht (105a) und der zweiten Gürtelschicht (105b) in Bezug auf die Äquatorebene des Reifens (100) um einen Winkel zwischen 10° und 40° geneigt sind.

11. Reifen (100) nach einem der vorherigen Ansprüche, bei dem die zusätzliche Verstärkungsschicht (105d) ihre axial äußeren Kanten axial nach innen in Bezug auf die entsprechenden äußeren Kanten der ersten Gürtelschicht (105a) und/oder zweiten Gürtelschicht (105b) versetzt haben.

12. Reifen (100) nach einem der vorherigen Ansprüche, bei dem die zusätzliche Verstärkungsschicht (105d) ihre axial äußeren Kanten entsprechend den axial äußeren Kanten der seitlichen Verstärkungsschichten (105e) aufweist.

13. Reifen (100) nach einem der Ansprüche 1 bis 10, bei dem die wenigstens eine zusätzliche Verstärkungsschicht (105d) ihre axial äußeren Kanten entsprechend der wenigstens einen unter den axial äußeren Kanten der ersten (105a) und zweiten (105b) Gürtelschichten aufweist.

14. Reifen (100) nach einem der vorherigen Ansprüche, bei dem beide seitliche Verstärkungsschichten (105e) und die zusätzliche Verstärkungsschicht (105d) wenigstens einen vorgeformten elementaren Metalldraht aufweisen.

15. Reifen (100) nach einem der vorherigen Ansprüche, bei dem die äußere Gürtelschicht (105c) ihre axial äußeren Kanten an einer axial äußeren Position in Bezug auf die axial inneren Kanten der seitlichen verstärkungsschichten (105e) oder entsprechend den axial äußeren Kanten der seitlichen Verstärkungsschichten (105e) aufweist.

16. Reifen (100) nach einem der vorherigen Ansprüche, bei dem die äußere Gürtelschicht (105c) ihre axial äußeren Kanten an einer axial inneren Position in Bezug auf die axial inneren Kanten der zusätzlichen Verstärkungsschicht (105d) oder entsprechend den axial äußeren Kanten der zusätzlichen Verstärkungsschicht (105d) aufweist.

17. Reifen (100) nach einem der vorherigen Ansprüche, bei dem die Gürtelstruktur ferner eine zusätzliche Gürtelschicht aufweist, die an einer radial äußeren Position in Bezug auf die zweite Gürtelschicht (105b) aufgebracht ist, wobei die zusätzliche Gürtelschicht mit Verstärkungselementen versehen ist, die parallel zueinander angeordnet sind und in Bezug auf die Äquatorebene des Reifens (100) geneigt sind.

18. Reifen (100) nach einem der vorherigen Ansprüche, der ein Reifen für Lastkraftwagen ist.

## Revendications

1. Pneu (100) comportant :
- une structure de carcasse comportant au moins une nappe de carcasse (101), de forme sensiblement toroïdale, ayant des bords latéraux opposés associés à des structures de talon respectives à droite et à gauche;
- une structure de ceinture (105) appliquée dans une position radialement externe par rapport à ladite structure de carcasse ;
- une bande de roulement (106) appliquée dans une position radialement externe par rapport à ladite structure de ceinture (105) ;
- deux flancs (103), chaque flanc étant appliqué latéralement sur des côtés opposés par rapport à ladite structure de carcasse ;
**caractérisé en ce que** ladite structure de ceinture comporte:
- au moins une paire de couches de renfort latérales (105e) disposées sensiblement symétriquement par rapport au plan équatorial dudit pneu (100) et appliquées en correspondance avec lesavec les parties axialement externes de ladite structure de ceinture (105) de pneu, lesdites couches latérales de renfort (105e) étant pourvues d'éléments de renfort orientés dans une direction sensiblement circonférentielle ;
- une première couche de ceinture (105a) appliquée dans une position radialement externe par rapport à ladite au moins une paire de couches latérales de renfort (105e), ladite première couche de ceinture (105a) étant pourvue d'éléments de renfort parallèles entre eux et inclinés par rapport au plan équatorial dudit pneu (100) ;
- au moins une couche de renfort additionnelle (105d) appliquée dans une position radialement externe par rapport à ladite première couche de ceinture (105a), ladite couche de renfort additionnelle (105d) étant pourvue d'éléments de renfort orientés dans une direction sensiblement circonférentielle ;
- une deuxième couche de ceinture (105b) appliquée dans une position radialement externe par rapport à ladite première couche de ceinture (105e), ladite deuxième couche de ceinture (105b) étant pourvue d'éléments de renfort parallèles entre eux et inclinés par rapport au plan équatorial dudit pneu (100) dans une direction opposée à ceux de ladite première couche de ceinture.

2. Pneu (100) selon la revendication 1, dans lequel ladite structure de ceinture (105) comporte en outre une couche de ceinture externe (105c) appliquée dans une position radialement externe par rapport aux dites première (105a) et deuxième (105b) couches de ceinture, ladite couche de ceinture externe (105c) étant pourvue d'éléments de renfort parallèles entre eux.

3. Pneu (100) selon la revendication 1 ou 2, dans lequel chacune desdites couches de renfort latérales (105e) a une largeur axiale inférieure ou égale à 40% par rapport à la largeur axiale de la structure de ceinture (105), ladite largeur axiale correspondant à la largeur axiale de la couche de ceinture la plus large.

4. Pneu (100) selon la revendication 3, dans lequel chacune desdites couches de renfort latérales (105e) a une largeur axiale de 5% à 30% par rapport à la largeur axiale de la structure de ceinture (105), ladite largeur axiale correspondant à la largeur axiale de la couche de ceinture la plus large.

5. Pneu (100) selon l'une quelconque des revendications précédentes, dans lequel lesdites couches de renfort latérales (105e) sont positionnées directement en contact avec ladite structure de carcasse.

6. Pneu (100) selon l'une quelconque des revendications 1 à 4, dans lequel au moins une sous-couche de ceinture est positionnée entre ladite structure de ceinture (105) et ladite structure de carcasse.

7. Pneu (100) selon l'une quelconque des revendications précédentes, dans lequel lesdites couches de renfort latérales (105e) ont leurs bords axialement externes décalés axialement vers l'intérieur par rapport aux bords axialement externes correspondants de ladite première couche de ceinture (105a).

8. Pneu (100) selon l'une quelconque des revendications précédentes, dans lequel ladite première couche de ceinture (105a) est placée directement en contact avec ladite au moins une paire de couches de renforct latérales (105e).

9. Pneu (100) selon l'une quelconque des revendications précédentes, dans lequel ladite première couche de ceinture (105a) a ses bords axialement externes décalés axialement vers l'intérieur par rapport aux bords axialement externes correspondants de ladite deuxième couche de ceinture (105b).

10. Pneu (100) selon l'une quelconque des revendications précédentes, dans lequel les éléments de renfort de ladite première couche de ceinture (105a) et ladite deuxième couche de ceinture (10su) sont inclinés par rapport au plan équatorial dudit pneu (100) selon un angle de 10° à 40°.

11. Pneu (100) selon l'une quelconque des revendications précédentes, dans lequel ladite couche de renfort additionnelle (105d) a ses bords axialement externes décalés axialement vers l'intérieur par rapport aux bords externes correspondants de ladite première couche de ceinture (105a) et/ou de ladite deuxième couche de ceinture (105b).

12. Pneu (100) selon l'une quelconque des revendications précédentes, dans lequel ladite couche de renfort additionnelle (105d) a ses bords axialement externes en correspondance avec lesavec les bords axialement externes desdites couches de renfort latérales (105e).

13. Pneu (100) selon l'une quelconque des revendications 1 à 10, dans lequel ladite au moins une couche de renfort additionnelle (105d) a ses bords axialement externes en correspondance avec lesavec les bords axialement externes d'au moins une desdites première (105a) et deuxième (105b) couches de ceinture.

14. Pneu (100) selon l'une quelconque des revendications précédentes, dans lequel à la fois lesdites couches de renfort latérales (105e) et ladite couche de renfort additionnelle (105d) comportent au moins un fil métallique élémentaire préformé.

15. Pneu (100) selon l'une quelconque des revendications précédentes, dans lequel ladite couche de ceinture externe (105c) a ses bords axialement externes en une position axialement externe par rapport aux bords axialement internes desdites couches de renfort latérales (105e) ou en correspondance avec les bords axialement externes desdites couches de renfort latérales (105e).

16. Pneu (100) selon l'une quelconque des revendications précédentes, dans lequel ladite couche de ceinture externe (105c) a ses bords axialement externes en une position axialement vers l'intérieur par rapport aux bords axialement internes de ladite couche de renfort additionnelle (105d) ou en correspondance avec les bords axialement externes de ladite couche de renfort additionnelle (105d).

17. Pneu (100) selon l'une quelconque des revendications précédentes, dans lequel ladite structure de ceinture comporte en outre une couche de ceinture additionnelle appliquée dans une position radialement externe par rapport à ladite deuxième couche de ceinture (105b), ladite couche de ceinture additionnelle étant pourvue d'éléments de renfort disposés parallèlement entre eux et inclinés par rapport au plan équatorial dudit pneu (100).

18. Pneu (100) selon l'une quelconque des revendications précédentes, qui est un pneu (100) de poids lourd.
